# EUROPEAN PATENT SPECIFICATION

(11) **EP 3 008 926 B1**
(45) Date of publication and mention of the grant of the patent: **05.09.2018**
(21) Application number: 14726950.0
(22) Date of filing: 23.05.2014
(51) Int. Cl.: H04W 4/70, H04W 4/90, H04W 76/16, H04W 88/06

(54) **METHOD FOR ENHANCING MACHINE TYPE COMMUNICATION BETWEEN A MOBILE COMMUNICATION NETWORK ON THE ONE HAND, AND A PLURALITY OF MACHINE TYPE COMMUNICATION DEVICES ON THE OTHER HAND**
VERFAHREN ZUR VERBESSERUNG VON MASCHINENARTIGER KOMMUNIKATION ZWISCHEN EINEM MOBILEN KOMMUNIKATIONSNETZWERK EINERSEITS UND EINER MEHRZAHL VON VORRICHTUNGEN FÜR MASCHINENARTIGE KOMMUNIKATION ANDERERSEITS
PROCÉDÉ D'AMÉLIORATION DE COMMUNICATION DE TYPE MACHINE ENTRE UN RÉSEAU DE COMMUNICATION MOBILE D'UN CÔTÉ, ET UNE PLURALITÉ DE DISPOSITIFS DE COMMUNICATION DE TYPE MACHINE D'AUTRE PART

(30) Priority: 11.06.2013 EP 13171452
(43) Date of publication of application: 20.04.2016
(73) Proprietor: Deutsche Telekom AG, 53113 Bonn (DE)
(72) Inventor: KURZ, Michael, A-1230 Wien (AT)
(74) Representative: Schwöbel, Thilo K.
(86) International application number: PCT/EP2014/060729
(87) International publication number: WO 2014/198518

(56) References cited:
- EP-A2- 2 552 034
- WO-A2-2004/032536
- US-A1- 2012 257 729
- US-A1- 2012 322 479

## Description

### BACKGROUND

The present invention relates a method for enhancing machine type communication between a mobile communication network on the one hand, and a plurality of machine type communication devices on the other hand.

The present invention further relates to a machine type communication device and a further machine type communication device for enhancing machine type communication between a base station entity of a mobile communication network and the machine type communication device and the machine type communication device.

The present invention additionally further relates to a system for enhancing machine type communication between a mobile communication network on the one hand, and a plurality of machine type communication devices on the other hand, wherein the system comprises the mobile communication network and the plurality of machine type communication devices.

Machine type communication is increasingly used in cellular access networks, as well as in information and telecommunications systems in general. Examples of systems using machine type communication devices for machine type communication operations may be applied include:
-- remotely controlled power meters as well as metering machine type communication devices,
-- remotely controlled machine type communication devices for controlling functions e.g. in a home which make it possible to turn on an heating prior to arriving home.
Further applications include remote monitoring, remote controlling, remote maintenance of machines, plants and systems, telemetry (e.g. temperature measurement), tracking applications, payment systems, fleet management, home automation, building technology, internet of things, etc. as for example disclosed in US20120322479.

In addition to examples of stationary machine type communication, there are also applications of mobile machine type communication, such as remotely monitoring and/or controlling functions or status information in a car, boat, or some other kind of vehicle.

Due to the vast amount of possible applications for machine type communication, the number of machine type communication devices and machine type communication systems is expected to grow rapidly and sustainably.

A typical machine type communication device is connected through cellular access networks to mobile communication networks, the access networks including typically GSM (Global System of Mobile Communication) access networks, GPRS (General Packet Radio System) access networks, and/or EPS/LTE (Evolved Packet System / Long Term Evolution) access networks. The application in which a machine type communication device is used needs the machine type communication device to report data, or it may happen that the machine type communication server needs to transmit data to the machine type communication device.

In case of failure of the connection between a machine type communication device and the mobile communication network, the measurement data related to that machine type communication device are lost or cannot be retrieved.

### SUMMARY

An object of the present invention is to provide a technically simple, effective and especially cost effective solution for enabling an enhanced machine type communication between a mobile communication network on the one hand and a plurality of machine type communication device on the other hand that is fault tolerant in the event that a machine type communication device loses its communication link or connection with the mobile communication network, i.e. with the base station entity of the mobile communication network. A further object of the present invention is to provide an machine type communication device and a further machine type communication device, as well as a system comprising the mobile communication network and the plurality of machine type communication devices, such that fault tolerance is provided.

The object of the present invention is achieved by a method for enhancing machine type communication between a mobile communication network on the one hand, and a plurality of machine type communication devices on the other hand, wherein the mobile communication network comprises at least one base station entity, wherein - at least temporarily - a radio connection between each of the machine type communication devices and the base station entity is established via a radio interface of the machine type communication devices, respectively, to the mobile communication network, wherein the plurality of machine type communication devices comprises at least a first machine type communication device, and - besides the first machine type communication device - at least one further machine type communication device, wherein the first machine type communication device and the at least one further machine type communication device both comprise - besides the radio interface to the mobile communication network - a further radio interface, respectively, wherein the further radio interface of the first machine type communication device and the further radio interface of the at least one further machine type communication device provide a communication link between the first machine type communication device and the at least one further machine type communication device, wherein the method comprises the following steps in case that the radio connection between the at least one further machine type communication device and the base station entity is functional, while the radio connection between the first machine type communication device and the base station entity being dysfunctional:
-- transmitting, in a first step, an emergency mode message from the base station entity to the at least one further machine type communication device, the emergency mode message comprising a transmission command to retrieve machine type communication data from the first machine type communication device,
-- transmitting, in a second step subsequent to the first step, an emergency mode request from the at least one further machine type communication device to the first machine type communication device in order to transmit machine type communication data to the at least one further machine type communication device,
-- transmitting, in a third step subsequent to the second step, the machine type communication data from the first machine type communication device to the at least one further machine type communication device according to the emergency mode request,
-- transmitting, in a fourth step subsequent to the third step, the machine type communication data - obtained from the first machine type communication device via the communication link between the first machine type communication device and the at least one further machine type communication device - from the at least one further machine type communication device to the base station entity.

It is thereby advantageously possible according to the present invention that - using the further radio interfaces of the first machine type communication device and of the at least one further machine type communication device - the machine type communication data provided by the first machine type communication device can still be transmitted to the base station entity of the mobile communication network even in case that the radio connection between the first machine type communication device and the base station entity is dysfunctional, i.e. is failed. Typically, the at least one further machine type communication device (i.e. the one machine type communication device of the plurality of other machine type communication devices; besides the first machine type communication device) is chosen such that it is geographically relatively near (or even the nearest machine type communication device) to the (partly failed) first machine type communication device. According to the present invention, it is thereby possible to achieve a more robust and fault tolerant behaviour of a plurality of machine type communication devices that are all connected to (or camping on) a base station entity of a mobile communication network.

In the context of the present invention, i.e. according to all embodiments of the present invention, the first machine type communication device is failed or the radio connection between the first machine type communication device and the base station entity of the mobile communication network is failed or dysfunctional in case that there is not communication or connection available between the respective base station entity and the first machine type communication device. This is, e.g., especially the case if the transmission and/or reception module (or transceiver module) regarding the radio interface (i.e. the radio interface providing the radio connection to the mobile communication network or to the base station entity) of the first machine type communication device is (temporarily or permanently) failed or dysfunctional but
-- neither a (complete) failure or dysfunction of the machine type communication data generation capabilities of the first machine type communication device (especially a measurement functionality and/or a detection functionality) has occurred (because otherwise the machine type communication data would not be able to be generated by the first machine type communication device, i.e. the machine type communication data generation capabilities of the first machine type communication device is at least in part functional),
-- nor the transmission and/or reception module (or transceiver module) regarding the further radio interface (i.e. the radio interface between the first machine type communication device and the further machine type communication device) of the first machine type communication device has failed or is dysfunctional (because otherwise the machine type communication data would not be able to be transmitted, neither directly to the base station entity, nor indirectly (via the further machine type communication device) to the base station entity).

In the context of the present invention, reference is made to machine type communication devices. Such machine type communication devices are typically used specifically for machine type communication purposes. However, also a user equipment to be potentially used in a mobile communication network (such as ordinary mobile phones, smart phones, tablet computers or other mobile devices such as personal digital assistants or the like) can be used (permanently or temporarily) for machine type communication purposes, e.g. to transmit a certain information, for example relating to a geographic position (in case that the mobile device comprises means to detect the geographic position of the mobile device by means of a receiver of a GNSS (global navigation satellite system) such as the GPS (global positioning system)) or relating to a temperature value or an acceleration value in case that the mobile device comprises an appropriate sensor device or sensor module. Therefore, the term machine type communication device also encompasses the case that the mobile device is a user equipment to be used in the mobile communication network, e.g. for voice communication and/or data communication purposes and is additionally used as a machine type communication device.

According to the present invention, it is furthermore advantageously possible that one or a plurality of further machine type communication devices in the vicinity (e.g. by means of a defined radius) of a first machine type communication device (which is failed regarding its communication link to the base station entity) provides at least partly the functionality of the (failed) first machine type communication device. According to the present invention, this preferably involves a change of configuration of the concerned further machine type communication devices and/or of the concerned first machine type communication devices, the change of configuration of the further machine type communication device being realized (in the first step of the inventive method) by means of the emergency mode message received from the base station entity, and the change of configuration of the first machine type communication device being realized (in the second step of the inventive method) by means of the emergency mode request received from the concerned (or geographically nearest) further machine type communication device.

In case that the first machine type communication device is more dysfunctional than only with respect to its communication link to the base station entity (e.g. in case that the first machine type communication device is completely dysfunctional or failed), it is also advantageously possible that by means of an interpolation operation - based especially on the current positions of the respective machine type communication devices -, the machine type communication devices in the vicinity provide information to interpolate measurement values estimated for the location of the (failed) first machine type communication devices, e.g. regarding to variables that are likely to vary continuously such as the temperature or the like. Optionally, it is also possible according to the present invention to apply the inventive method or use the inventive system or machine type communication devices such as to reduce the energy consumption of the plurality of machine type communication devices and/or to adjust the measurement granularity of the measurement capabilities of the plurality of machine type communication devices and/or to provide a load balancing by means of an adjustment taking into consideration the load of the plurality of machine type communication devices.

According to the present invention, the data transmission among the machine type communication devices of the plurality of machine type communication devices can be provided in an encrypted or otherwise securitised manner.

According to a preferred embodiment of the present invention, the information that the radio connection between the first machine type communication device and the base station entity is dysfunctional is stored in a memory device.

Thereby, it is advantageously possible according to the present invention that a memory device or a memory, such as a database or the like, tracks the availability of the machine type communication devices of the plurality of machine type communication devices and keeps this information preferably continuously up to date, i.e. it is tracked whether the machine type communication devices (of the plurality of machine type communication devices associated or assigned to the respective base station entity) can be accessed by the base station entity (or a communication link be established between the base station entity and the respective machine type communication device) or not. In case that the functionality of the first machine type communication device is again restored, it is not needed any more that the further machine type communication devices transmit measurement or other data from the first machine type communication, and such can be automatically re-configured to their normal mode of operation. Accordingly, the respective entry in the database or memory devices is again changed indicating the the dysfunctional state of the concerned first machine type communication device does not apply any longer.

According to the present invention, it is especially preferred that a verification of the functionality of the plurality of machine type communication devices (as to the radio interface to the mobile communication network or to the base station entity) is performed regularly, especially at least once during a predetermined time interval of, e.g., 10 seconds, or 20 seconds, or 30 seconds, or 40 seconds, or 50 seconds, or 60 seconds, or 2 minutes, or 5 minutes, or 10 minutes, or 15 minutes, or 20 minutes, or 30 minutes, 1 hour, or 2 hours, or 3 hours, or 6 hours, or 10 hours, or 12 hours, or 24 hours, or 36 hours, or 48 hours, or 60 hours, or 72 hours, or 1 week, or 2 weeks, or 4 weeks.

According to a further preferred embodiment of the present invention, the emergency mode message from the base station entity to the at least one further machine type communication device results in a reconfiguration of the at least one further machine type communication device.

Thereby, it is advantageously possible according to the present invention that by means of the emergency mode message, the further machine type communication device is reconfigurable in order to partly take over the functionality of the first machine type communication device.

Furthermore, according to an embodiment of the present invention, it is preferred that the emergency mode request from the at least one further machine type communication device to the first machine type communication device results in a reconfiguration of the first machine type communication device.

Thereby, it is advantageously possible according to the present invention that by means of the emergency mode request, the first machine type communication device is reconfigurable in order to change - for the transmission of the machine type communication data - from a communication with the base station entity to a communication with the respective further machine type communication device.

According to a further preferred embodiment of the present invention, the method comprises the further steps in case that the radio connection between the first machine type communication device and the base station entity is detected to be functional again:
-- transmitting, in a fifth step subsequent to the fourth step, a normal mode message from the base station entity to the at least one further machine type communication device, the normal mode message comprising a command to stop to retrieve machine type communication data from the first machine type communication device,
-- transmitting, in a sixth step subsequent to the fifth step, a normal mode request to the first machine type communication device to transmit machine type communication data again to the base station entity.

Thereby, it is advantageously possible to restore the normal functionality of the machine type communication devices with the base station entity. Preferably, also the database entry is changes to reflect the changed state of functionality of the communication link between the first machine type communication device and the base station entity.

According to the present invention, it is furthermore preferred that the normal mode request is either
-- transmitted by the at least one further machine type communication device to the first machine type communication device, or
-- transmitted by the base station entity to the first machine type communication device.

Thereby, it is advantageously possible according to the present invention to provide a flexible reconfiguration of the plurality of machine type communication devices.

Furthermore, the present invention relates to a machine type communication device and further machine type communication device for enhancing machine type communication between a base station entity of a mobile communication network and the machine type communication device and the machine type communication device, wherein - at least temporarily - a radio connection between, on the one hand, the machine type communication device and the further machine type communication device, and, on the other hand, the base station entity is established via a radio interface of the machine type communication devices, respectively, wherein the machine type communication device and the further machine type communication device both comprise - besides the radio interface to the mobile communication network - a further radio interface, respectively, wherein the further radio interface of the machine type communication device and the further radio interface of the further machine type communication device provide a communication link between the machine type communication device and the further machine type communication device, wherein the machine type communication device and the further machine type communication device are configured such that in case that the radio connection between the further machine type communication device and the base station entity is functional, while the radio connection between the machine type communication device and the base station entity being dysfunctional:
-- an emergency mode message is transmitted from the base station entity to the further machine type communication device, the emergency mode message comprising a transmission command to retrieve machine type communication data from the machine type communication device,
-- an emergency mode request is transmitted from the further machine type communication device to the machine type communication device in order to transmit machine type communication data to the further machine type communication device,
-- the machine type communication data is transmitted from the machine type communication device to the further machine type communication device according to the emergency mode request,
-- the machine type communication data - obtained from the machine type communication device via the communication link between the machine type communication device and the further machine type communication device - is transmitted from the further machine type communication device to the base station entity.

It is furthermore preferred according to the present invention - also with respect to the machine type communication device and the further machine type communication device - that the further radio interface is a radio interface according to at least one of the following standards:
-- the Bluetooth standard,
-- the ZigBee standard,
-- a NFC (near field communication) standard.

All preferred embodiments as mentioned above with regard to the inventive method are also - mutatis mutandis - to be applied to the machine type communication device and the further machine type communication device.

Additionally, the present invention relates to a system for enhancing machine type communication between a mobile communication network on the one hand, and a plurality of machine type communication devices on the other hand, wherein the system comprises the mobile communication network and the plurality of machine type communication devices,
wherein the mobile communication network comprises at least one base station entity,
wherein - at least temporarily - a radio connection between each of the machine type communication devices and the base station entity is established via a radio interface of the machine type communication devices, respectively, to the mobile communication network,
wherein the plurality of machine type communication devices comprises at least a first machine type communication device, and - besides the first machine type communication device - at least one further machine type communication device,
wherein the first machine type communication device and the at least one further machine type communication device both comprise - besides the radio interface to the mobile communication network - a further radio interface, respectively, wherein the further radio interface of the first machine type communication device and the further radio interface of the at least one further machine type communication device provide a communication link between the first machine type communication device and the at least one further machine type communication device,
wherein the system is configured such in case that the radio connection between the at least one further machine type communication device and the base station entity is functional, while the radio connection between the first machine type communication device and the base station entity being dysfunctional:
-- an emergency mode message is transmitted from the base station entity to the at least one further machine type communication device, the emergency mode message comprising a transmission command to retrieve machine type communication data from the first machine type communication device,
-- an emergency mode request is transmitted from the at least one further machine type communication device to the first machine type communication device in order to transmit machine type communication data to the at least one further machine type communication device,
-- the machine type communication data is transmitted from the first machine type communication device to the at least one further machine type communication device according to the emergency mode request,
-- the machine type communication data - obtained from the first machine type communication device via the communication link between the first machine type communication device and the at least one further machine type communication device - is transmitted from the at least one further machine type communication device to the base station entity.

It is furthermore preferred according to the present invention - also with respect to the system - that the further radio interface is a radio interface according to at least one of the following standards:
-- the Bluetooth standard,
-- the ZigBee standard,
-- a NFC (near field communication) standard.

All preferred embodiments as mentioned above with regard to the inventive method are also - mutatis mutandis - to be applied to the inventive system.

Additionally, the present invention relates to a program comprising a computer readable program code which, when executed on a computer or on a machine type communication device or on a network component of a mobile communication network, causes the computer or the machine type communication device or the network component of the mobile communication network to perform the inventive method.

Still additionally, the present invention relates to computer program product for using a machine type communication device with a mobile communication network, the computer program product comprising a computer program stored on a storage medium, the computer program comprising program code which, when executed on a computer or on a machine type communication device or on a network component of a mobile communication network, causes the computer or the machine type communication device or the network component of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a mobile communication network and a plurality of machine type communication devices that are connected to the mobile communication network via a base station entity of the mobile communication network.
Figures 2 and 3 schematically illustrate two different situations regarding the functionality of the communication link between one of the plurality of machine type communication devices (i.e. of the first machine type communication device).
Figure 4 schematically illustrates a plurality of machine type communication devices and a base station entity.
Figure 5 schematically illustrates a flow diagram according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

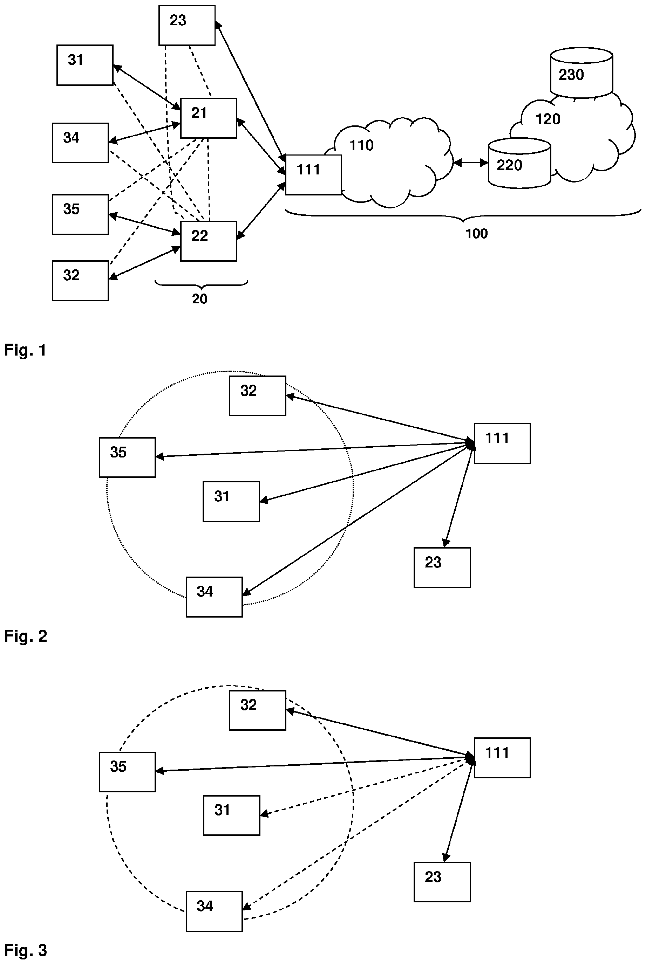

In Figure 1, a mobile communication network 100, especially a public land mobile network 100, is schematically shown, the mobile communication network 100 comprising an access network 110 and a core network 120. The mobile communication network 100 is preferably a cellular telecommunications network comprising typically a plurality of network cells or radio cells. A radio cell typically comprises at least one base station entity, one of which is represented in Figure 1 by means of reference sign 111.

According to the present invention, a plurality of machine type communication devices are linked to the base station entity 111 by respective radio connections between each machine type communication device of the plurality of machine type communication devices and the base station entity, i.e. each of the machine type communication devices has a radio interface to the mobile communication network 100. The plurality of machine type communication devices is generally designated by means of reference sign 20 and represented in Figure 1. Exemplarily, three machine type communication devices 20 - namely a first machine type communication device 21, a second machine type communication device 22, and third machine type communication device 23 - are represented in Figure 1. The machine type communication devices 20 (i.e. the first, second and third machine type communication device 21, 22, 23) have a radio interface to the mobile communication network 100, i.e. to the base station entity 111.

Typically according to the present invention, the machine type communication devices 20 comprise - besides the radio interface to the mobile communication network 100 - a further radio interface, wherein the further radio interface of the machine type communication devices 20 provides a communication link among the machine type communication devices 20. The communication links related to the further radio interfaces of the machine type communication devices 20 are represented in Figure 1 by means of dashed line, i.e. the first machine type communication device 21 as well as the second machine type communication device 22 and the third machine type communication device 23 comprise each a respective further radio interface providing the possibility of establishing a corresponding radio link between the first and second machine type communication device 21, 22, between the first and the third machine type communication device 21, 23, and between the second and the third machine type communication device 22, 23.

The machine type communication devices 20 can either be realized as devices that are integrated with their sensor, measurement and/or detection means, as exemplarily represented with the third machine type communication device 23. Alternatively, the machine type communication devices 20 can also be realized as gateways that are linked via a radio link to other devices that comprise the sensor, measurement and/or detection means, and transmit machine type communication data to the gateway machine type communication device. This radio link between the gateway machine type communication devices and their sensor device or plurality of sensor devices can be realized by any radio link, especially short range radio link such as Bluetooth, WLAN (Wireless Local Area Network), ZigBee, NFC (Near Field Communication) or the like. Furthermore, it can be homogeneous or heterogeneous, i.e. different gateway machine type communication devices are linked to their respective sensor devices by means of different radio links (i.e. radio links according to a different radio standard). It is furthermore also possible that different sensor devices linked to the same gateway machine type communication device are connected to the gateway machine type communication device via different radio links or radio links according to different standards or radio protocols, provided that the respective gateway machine type communication device is enabled to use such different radio links or radio links according to different standards or radio protocols. In the example represented in Figure 1, the first machine type communication device 21 is a gateway machine type communication device having a radio link to a first sensor device 31 (i.e. a sensor, measurement and/or detection means associated with the first machine type communication device 21). Furthermore, the first machine type communication device 21 has a radio link to a fourth sensor device 34 (i.e. a sensor, measurement and/or detection means associated with the first machine type communication device 21). Likewise in the example represented in Figure 1, the second machine type communication device 22 is also a gateway machine type communication device having a radio link to a fifth sensor device 35 (likewise a sensor, measurement and/or detection means associated with the second machine type communication device 22). Furthermore, the second machine type communication device 22 has a radio link to a second sensor device 32 (likewise a sensor, measurement and/or detection means associated with the first machine type communication device 22).

In a normal mode of operation of the plurality of machine type communication devices 20 and base station entity 111, for the exemplary situation represented in Figure 1, the first machine type communication device 21 reports (i.e. transmits) machine type communication data (i.e. data generated by the sensor, measurement and/or detection means) of the first sensor device 31 and of the fourth sensor device 34 to the base station entity 111, the second machine type communication device 22 reports (i.e. transmits) machine type communication data (i.e. data generated by the sensor, measurement and/or detection means) of the fifth sensor device 35 and of the second sensor device 32 to the base station entity 111, and the third machine type communication device 23 reports (i.e. transmits) machine type communication data (generated by the integrated sensor, measurement and/or detection means) to the base station entity 111. Figure 2 shows schematically an exemplary geographical situation of the sensor devices 31, 32, 34, 35 and the third machine type communication device 23 (which can also be called an integrated machine type communication device due to the fact that it is no gateway machine type communication device and hence comprises the respective sensor, measurement and/or detection means in an integrated manner). In this geographical situation, the second, fourth and fifth sensor device 32, 34, 35 are located in the vicinity of the first sensor device 31, whereas the third machine type communication device 23 is located at a greater distance from the first sensor device 31.

The measurement data or machine type communication data received by the base station entity 111 are assigned to the different sensor devices and/or machine type communication devices and stored or forwarded for further use, especially towards a machine-to-machine server (M2M-server) 230 and/or to a device management server (DMS server) 220. The device management server 220 corresponds to a database that comprises entries regarding all sensor devices and/or gateway machine type communication devices and/or (integrated, i.e. non-gateway) machine type communication devices. The devices management server 220 comprises commands from the machine-to-machine server 230 regarding specific machine type communication devices. The M2M-Server 230 and the DMS server 220 can either be realized as stand-alone devices or can be integrated in other network entities of the core network 120.

The present invention is directed to the situation where the radio interface to the base station entity 111 of one of the machine type communication devices 20 is dysfunctional. In the following exemplarily described situation, the machine type communication device having at least temporarily the dysfunctional radio connection to the base station entity 111 is the first machine type communication device 21. The second and third machine type communication devices 22, 23 are therefore called the further machine type communication devices (of the plurality of the first, second and third machine type communication devices 21, 22, 23). However - in alternative scenarios -, also the second or alternatively the third machine type communication device 22, 23 could have a dysfunctional radio connection to the base station entity 111, and hence the other machine type communication devices would have to be called the "other machine type communication devices", respectively. Figure 3 shows schematically the exemplary geographical situation (also shown in Figure 2) of the sensor devices 31, 32, 34, 35 and the third machine type communication device 23, but with the first machine type communication device 21 having a dysfunctional radio link to the base station entity 111 resulting in the first and fourth sensor device 31, 34 having lost the connection to the base station entity 111 (represented in Figure 3 by means of a dashed arrow towards the first and fourth sensor device 31, 34. In this situation, the base station entity 111 detects the failure of the communication link to the first machine type communication device 21. In case that the base station entity 111 further detects the communication link to the second and/or third machine type communication device 22, 23 as being operational (or functional), it conducts the first step of the inventive method, namely to transmit the emergency mode message to at least one of the other machine type communication devices, i.e. to the second and/or third machine type communication device 22, 23. In the exemplary situation represented in Figures 2 and 3, the emergency mode message is transmitted to the second machine type communication device 22, and the machine type communication data of the first machine type communication device 21 is transmitted via the second machine type communication device 22 to the base station entity 111.

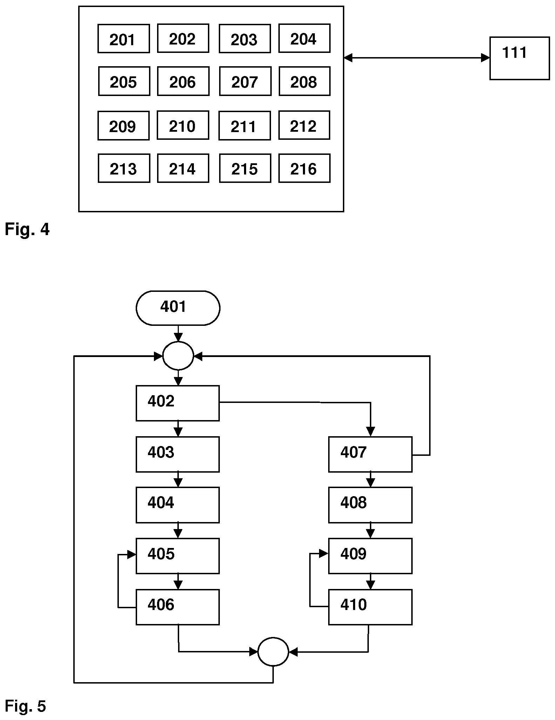

Figure 5 schematically illustrates a flow diagram according to the present invention, especially to the method according to the present invention, and especially a flow diagram to be executed by the base station entity 111 to implement the inventive method. In a first processing step 401, the method starts. The flow proceeds to a second processing step 402. In the second processing step 402, the base station entity 111 verifies whether one or a plurality of the machine type communication devices that should be connected to the base station entity 111 is not connected or not visible to the base station entity 111. If this is the case, the flow proceeds to a third processing step 403 (according to the exemplary situation described, the connection to the first machine type communication device 21 is detected to be lost), otherwise (i.e. in case that no machine type communication device is detected to have a dysfunctional radio connection to the base station entity 111) the flow proceeds to a seventh processing step 407. In the third processing step 403, the base station entity 111 transmits an information to the DMS server 220 that the corresponding machine type communication device is not visible (in the present case, a corresponding entry in the database of the DMS server 220 is updated with respect to the first machine type communication device 21 in the third processing step 403). The flow proceeds to a fourth processing step 404. In the fourth processing step 404, at least one machine type communication device of the further machine type communication devices 22, 23 is determined that should try to establish a communication link to the first machine type communication device 21. This determination is especially based on geographical vicinity of the respective machine type communication devices. The flow proceeds to a fifth processing step 405. In the fifth processing step 405, the base station entity 111 generates and transmits the emergency mode message to the determined at least one machine type communication device of the further machine type communication devices 22, 23, thereby changing the configuration of the at least one further machine type communication device 22, 23, and requesting the transmission (by the at least one further machine type communication device 22, 23) of the emergency mode request to the first machine type communication device 21. The flow then proceeds to a sixth processing step 406. In the sixth processing step 406, the base station entity 111 verifies whether the configuration update has been successfully performed, especially by verifying whether the base station entity 111 receives machine type communication data from the first machine type communication device 21 via the at least one further machine type communication device 22, 23. If this is the case, the flow proceeds to the second processing step 402, otherwise, the flow proceeds to the fifth processing step 405. As long as the communication link between the first machine type communication device 21 and the base station entity 111 is dysfunctional, the second to sixth processing steps are repeated. In case that the communication link between the first machine type communication device 21 and the base station entity 111 is not dysfunctional any more (which means that no machine type communication device is detected to have a dysfunctional radio connection to the base station entity 111), the flow proceeds to the seventh processing step 407. In the seventh processing step 407, it is verified whether one or more machine type communication devices 20 are registered in the DMS server database as having a dysfunctional radio link or as not being visible to the respective base station entity 111. If this is the case, the flow proceeds to an eighth processing step 408, otherwise the flow proceeds to the second processing step 402. In the eighth processing step 408, the database entry with respect to the previously but no longer failed machine type communication device (i.e. the first machine type communication device 21 having previously had a dysfunctional radio link to the base station entity 111) is modified to correspond to the normal state, i.e. having an operational radio link to the base station entity 111. The flow then proceeds to an ninth processing step 409. In the ninth processing step 409, the other machine type communication devices 22, 23 (previously (in the fifth processing step 405) configured to replace the base station entity 111 for the failured first machine type communication device 21) are reconfigured by means of transmitting a normal mode message to the further machine type communication device 22, 23, and by sending a normal mode request to the first machine type communication device, wherein the normal mode request can either be transmitted by the base station entity 111 or by the further machine type communication device 22, 23. The flow then proceeds to a tenth processing step 410. In the tenth processing step 410, it is verified (especially by the base station entity 111) whether the configuration update (i.e. the re-configuration to the normal state) has been successfully performed. If this is the case, the flow proceeds to the second processing step 402, otherwise, the flow proceeds to the ninth processing step 409.

According to the present invention, the inventive method can be used to realize energy saving measures and/or adapt the measurement granularity of a plurality of machine type communication devices connected to a base station entity 111. This is exemplarily represented in Figure 4, where sixteen machine type communication devices 201, 202, 203, 204, 205, 206, 207, 208, 209, 210, 211, 212, 213, 214, 215, and 216 are arranged in a geographical pattern as depicted in Figure 4. In case the measurement granularity should be reduced and/or energy saving should be performed, e.g. only the machine type communication devices 201, 203, 206, 208, 209, 211, 214, and 216 provide machine type communication data (i.e. the machine type communication devices 202, 204, 205, 207, 210, 212, 213, and 215 are turned off or do not provide machine type communication data). Likewise, it is advantageously possible according to the present invention that load balancing measures are applied such that only a subset of the machine type communication devices 201 to 216 are used or turned on, e.g. in a situation where
-- the machine type communication devices 202 and 215 experience high load,
-- the machine type communication devices 203, 209, and 211 experience normal load, and
-- the machine type communication devices 201, 204, 205, 206, 207, 208, 210, 212, 213, 214, and 216 experience low load,
only the machine type communication devices experiencing low load are considered for providing additional machine type communication data.

## Claims

1. Method for enhancing machine type communication between a mobile communication network (100) on the one hand, and a plurality of machine type communication devices (20) on the other hand,
wherein the mobile communication network (100) comprises at least one base station entity (111), wherein - at least temporarily - a radio connection between each of the machine type communication devices (20) and the base station entity (111) is established via a radio interface of the machine type communication devices (20), respectively, to the mobile communication network (100),
wherein the plurality of machine type communication devices (20) comprises at least a first machine type communication device (21), and - besides the first machine type communication device (21) - at least one further machine type communication device (22, 23),
wherein the first machine type communication device (21) and the at least one further machine type communication device (22, 23) both comprise - besides the radio interface to the mobile communication network (100) - a further radio interface, respectively, wherein the further radio interface of the first machine type communication device (21) and the further radio interface of the at least one further machine type communication device (22, 23) provide a communication link between the first machine type communication device (21) and the at least one further machine type communication device (22, 23), **characterised in that** the method comprises the following steps in case that the radio connection between the at least one further machine type communication device (22, 23) and the base station entity (111) is functional, while the radio connection between the first machine type communication device (21) and the base station entity (111) being dysfunctional:
-- transmitting, in a first step, an emergency mode message from the base station entity (111) to the at least one further machine type communication device (22, 23), the emergency mode message comprising a transmission command to retrieve machine type communication data from the first machine type communication device (21),
-- transmitting, in a second step subsequent to the first step, an emergency mode request from the at least one further machine type communication device (22, 23) to the first machine type communication device (21) in order to transmit machine type communication data to the at least one further machine type communication device (22, 23),
-- transmitting, in a third step subsequent to the second step, the machine type communication data from the first machine type communication device (21) to the at least one further machine type communication device (22, 23) according to the emergency mode request,
-- transmitting, in a fourth step subsequent to the third step, the machine type communication data - obtained from the first machine type communication device (21) via the communication link between the first machine type communication device (21) and the at least one further machine type communication device (22, 23) - from the at least one further machine type communication device (22, 23) to the base station entity (111).

2. Method according to claim 1, wherein the information that the radio connection between the first machine type communication device (21) and the base station entity (111) is dysfunctional is stored in a memory device.

3. Method according to one of the preceding claims, wherein the emergency mode message from the base station entity (111) to the at least one further machine type communication device (22, 23) results in a reconfiguration of the at least one further machine type communication device (22, 23).

4. Method according to one of the preceding claims, wherein the emergency mode request from the at least one further machine type communication device (22, 23) to the first machine type communication device (21) results in a reconfiguration of the first machine type communication device (21).

5. Method according to one of the preceding claims, wherein the method comprises the further steps in case that the radio connection between the first machine type communication device (21) and the base station entity (111) is detected to be functional again:
-- transmitting, in a fifth step subsequent to the fourth step, a normal mode message from the base station entity (111) to the at least one further machine type communication device (22, 23), the normal mode message comprising a command to stop to retrieve machine type communication data from the first machine type communication device (21),
-- transmitting, in a sixth step subsequent to the fifth step, a normal mode request to the first machine type communication device (21) to transmit machine type communication data again to the base station entity (111).

6. Method according to one of the preceding claims, wherein the normal mode request is either
-- transmitted by the at least one further machine type communication device (22, 23) to the first machine type communication device (21), or
-- transmitted by the base station entity (111) to the first machine type communication device (21).

7. Machine type communication device (21) and further machine type communication device (22, 23) for enhancing machine type communication between a base station entity (111) of a mobile communication network (100) and the machine type communication device (22, 23) and the machine type communication device (21),
wherein - at least temporarily - a radio connection between, on the one hand, the machine type communication device (21) and the further machine type communication device (22, 23), and, on the other hand, the base station entity (111) is established via a radio interface of the machine type communication devices (21, 22, 23), respectively,
wherein the machine type communication device (21) and the further machine type communication device (22, 23) both comprise - besides the radio interface to the mobile communication network (100) - a further radio interface, respectively, wherein the further radio interface of the machine type communication device (21) and the further radio interface of the further machine type communication device (22, 23) provide a communication link between the machine type communication device (21) and the further machine type communication device (22, 23), **characterised in that** the machine type communication device (21) and the further machine type communication device (22, 23) are configured such that in case that the radio connection between the further machine type communication device (22, 23) and the base station entity (111) is functional, while the radio connection between the machine type communication device (21) and the base station entity (111) being dysfunctional:
-- an emergency mode message is transmitted from the base station entity (111) to the further machine type communication device (22, 23), the emergency mode message comprising a transmission command to retrieve machine type communication data from the machine type communication device (21),
-- an emergency mode request is transmitted from the further machine type communication device (22, 23) to the machine type communication device (21) in order to transmit machine type communication data to the further machine type communication device (22, 23),
-- the machine type communication data is transmitted from the machine type communication device (21) to the further machine type communication device (22, 23) according to the emergency mode request,
-- the machine type communication data - obtained from the machine type communication device (21) via the communication link between the machine type communication device (21) and the further machine type communication device (22, 23) - is transmitted from the further machine type communication device (22, 23) to the base station entity (111).

8. Machine type communication device (21) and further machine type communication device (22, 23) according to claim 7, wherein the further radio interface is a radio interface according to at least one of the following standards:
-- the Bluetooth standard,
-- the ZigBee standard,
-- a NFC (near field communication) standard.

9. System for enhancing machine type communication between a mobile communication network (100) on the one hand, and a plurality of machine type communication devices (20) on the other hand, wherein the system comprises the mobile communication network (100) and the plurality of machine type communication devices (20),
wherein the mobile communication network (100) comprises at least one base station entity (111), wherein - at least temporarily - a radio connection between each of the machine type communication devices (20) and the base station entity (111) is established via a radio interface of the machine type communication devices (20), respectively, to the mobile communication network (100),
wherein the plurality of machine type communication devices (20) comprises at least a first machine type communication device (21), and - besides the first machine type communication device (21) - at least one further machine type communication device (22, 23),
wherein the first machine type communication device (21) and the at least one further machine type communication device (22, 23) both comprise - besides the radio interface to the mobile communication network (100) - a further radio interface, respectively, wherein the further radio interface of the first machine type communication device (21) and the further radio interface of the at least one further machine type communication device (22, 23) provide a communication link between the first machine type communication device (21) and the at least one further machine type communication device (22, 23), **characterised in that** the system is configured such in case that the radio connection between the at least one further machine type communication device (22, 23) and the base station entity (111) is functional, while the radio connection between the first machine type communication device (21) and the base station entity (111) being dysfunctional:
-- an emergency mode message is transmitted from the base station entity (111) to the at least one further machine type communication device (22, 23), the emergency mode message comprising a transmission command to retrieve machine type communication data from the first machine type communication device (21),
-- an emergency mode request is transmitted from the at least one further machine type communication device (22, 23) to the first machine type communication device (21) in order to transmit machine type communication data to the at least one further machine type communication device (22, 23),
-- the machine type communication data is transmitted from the first machine type communication device (21) to the at least one further machine type communication device (22, 23) according to the emergency mode request,
-- the machine type communication data - obtained from the first machine type communication device (21) via the communication link between the first machine type communication device (21) and the at least one further machine type communication device (22, 23) - is transmitted from the at least one further machine type communication device (22, 23) to the base station entity (111).

10. System according to claim 9, wherein the further radio interface is a radio interface according to at least one of the following standards:
-- the Bluetooth standard,
-- the ZigBee standard,
-- a NFC (near field communication) standard.

11. Program comprising a computer readable program code which, when executed on a computer or on a machine type communication device (20) or on a network component of a mobile communication network (100), causes the computer or the machine type communication device (20) or the network component of the mobile communication network (100) to perform a method according one of claims 1 to 6.

12. Computer program product for using a machine type communication device (20) with a mobile communication network (100), the computer program product comprising a computer program stored on a storage medium, the computer program comprising program code which, when executed on a computer or on a machine type communication device (20) or on a network component of a mobile communication network (100), causes the computer or the machine type communication device (20) or the network component of the mobile communication network (100) to perform a method according one of claims 1 to 6.

## Patentansprüche

1. Verfahren zum Verbessern einer Maschinenkommunikation zwischen einem Mobilkommunikationsnetz (100) einerseits und mehreren Maschinenkommunikationsvorrichtungen (20) andererseits,
wobei das Mobilkommunikationsnetz (100) mindestens eine Basisstationsentität (111) umfasst, wobei jeweils - wenigstens vorübergehend - eine Funkverbindung zwischen jeder der Maschinenkommunikationsvorrichtungen (20) und der Basisstationsentität (111) über eine Funkschnittstelle der Maschinenkommunikationsvorrichtungen (20) mit dem Mobilkommunikationsnetz (100) hergestellt wird,
wobei die mehreren Maschinenkommunikationsvorrichtungen (20) mindestens eine erste Maschinenkommunikationsvorrichtung (21) und - neben der ersten Maschinenkommunikationsvorrichtung (21) - mindestens eine weitere Maschinenkommunikationsvorrichtung (22, 23) umfassen,
wobei die erste Maschinenkommunikationsvorrichtung (21) und die mindestens eine weitere Maschinenkommunikationsvorrichtung (22, 23) beide - neben der Funkschnittstelle zu dem Mobilkommunikationsnetz (100) - jeweils eine weitere Funkschnittstelle umfassen, wobei die weitere Funkschnittstelle der ersten Maschinenkommunikationsvorrichtung (21) und die weitere Funkschnittstelle der mindestens einen weiteren Maschinenkommunikationsvorrichtung (22, 23) einen Kommunikationslink zwischen der ersten Maschinenkommunikationsvorrichtung (21) und der mindestens einen weiteren Maschinenkommunikationsvorrichtung (22, 23) bereitstellen,
**dadurch gekennzeichnet, dass** das Verfahren die folgenden Schritte umfasst, falls die Funkverbindung zwischen der mindestens einen weiteren Maschinenkommunikationsvorrichtung (22, 23) und der Basisstationsentität (111) funktionstüchtig ist, während die Funkverbindung zwischen der ersten Maschinenkommunikationsvorrichtung (21) und der Basisstationsentität (111) nicht funktionstüchtig ist:
- Senden, in einem ersten Schritt, einer Notfallmodus-Nachricht von der Basisstationsentität (111) zu der mindestens einen weiteren Maschinenkommunikationsvorrichtung (22, 23), wobei der Notfallmodus-Nachricht einen Sendebefehl umfasst, um Maschinenkommunikationsdaten von der ersten Maschinenkommunikationsvorrichtung (21) abzurufen,
- Senden, in einem zweiten Schritt im Anschluss an den ersten Schritt, einer Notfallmodus-Anforderung von der mindestens einen weiteren Maschinenkommunikationsvorrichtung (22, 23) zu der ersten Maschinenkommunikationsvorrichtung (21), um Maschinenkommunikationsdaten zu der mindestens einen weiteren Maschinenkommunikationsvorrichtung (22, 23) zu senden,
- Senden, in einem dritten Schritt im Anschluss an den zweiten Schritt, der Maschinenkommunikationsdaten von der ersten Maschinenkommunikationsvorrichtung (21) zu der mindestens einen weiteren Maschinenkommunikationsvorrichtung (22, 23) gemäß der Notfallmodus-Anforderung,
- Senden, in einem vierten Schritt im Anschluss an den dritten Schritt, der Maschinenkommunikationsdaten, die von der ersten Maschinenkommunikationsvorrichtung (21) über den Kommunikationslink zwischen der ersten Maschinenkommunikationsvorrichtung (21) und der mindestens einen weiteren Maschinenkommunikationsvorrichtung (22, 23) erhalten wurden, von der mindestens einen weiteren Maschinenkommunikationsvorrichtung (22, 23) zu der Basisstationsentität (111).

2. Verfahren nach Anspruch 1, wobei die Information, dass die Funkverbindung zwischen der ersten Maschinenkommunikationsvorrichtung (21) und der Basisstationsentität (111) nicht funktionstüchtig ist, in einer Speichervorrichtung gespeichert wird.

3. Verfahren nach einem der vorangehenden Ansprüche, wobei die Notfallmodus-Nachricht von der Basisstationsentität (111) zu der mindestens einen weiteren Maschinenkommunikationsvorrichtung (22, 23) zu einer Rekonfiguration der mindestens einen weiteren Maschinenkommunikationsvorrichtung (22, 23) führt.

4. Verfahren nach einem der vorangehenden Ansprüche, wobei die Notfallmodus-Anforderung von der mindestens einen weiteren Maschinenkommunikationsvorrichtung (22, 23) zu der ersten Maschinenkommunikationsvorrichtung (21) zu einer Rekonfiguration der ersten Maschinenkommunikationsvorrichtung (21) führt.

5. Verfahren nach einem der vorangehenden Ansprüche, wobei das Verfahren folgende weitere Schritte umfasst, falls detektiert wird, dass die Funkverbindung zwischen der ersten Maschinenkommunikationsvorrichtung (21) und der Basisstationsentität (111) wieder funktionstüchtig ist:
- Senden, in einem fünften Schritt im Anschluss an den vierten Schritt, einer Normalmodusnachricht von der Basisstationsentität (111) zu der mindestens einen weiteren Maschinenkommunikationsvorrichtung (22, 23), wobei die Normalmodusnachricht einen Befehl umfasst, das Abrufen der Maschinenkommunikationsdaten von der ersten Maschinenkommunikationsvorrichtung (21) zu stoppen,
- Senden, in einem sechsten Schritt im Anschluss an den fünften Schritt, einer Normalmodusanforderung zu der ersten Maschinenkommunikationsvorrichtung (21), um Maschinenkommunikationsdaten wieder zu der Basisstationsentität (111) zu senden.

6. Verfahren nach einem der vorangehenden Ansprüche, wobei die Normalmodusanforderung entweder
- durch die mindestens eine weitere Maschinenkommunikationsvorrichtung (22, 23) zu der ersten Maschinenkommunikationsvorrichtung (21) gesendet wird, oder
- durch die Basisstationsentität (111) zu der ersten Maschinenkommunikationsvorrichtung (21) gesendet wird.

7. Maschinenkommunikationsvorrichtung (21) und weitere Maschinenkommunikationsvorrichtung (22, 23) zum Verbessern einer Maschinenkommunikation zwischen einer Basisstationsentität (111) eines Mobilkommunikationsnetzes (100) und der Maschinenkommunikationsvorrichtung (22, 23) und der Maschinenkommunikationsvorrichtung (21),
wobei - wenigstens vorübergehend - eine Funkverbindung zwischen einerseits der Maschinenkommunikationsvorrichtung (21) und der weiteren Maschinenkommunikationsvorrichtung (22, 23) und andererseits der Basisstationsentität (111) jeweils über eine Funkschnittstelle der Maschinenkommunikationsvorrichtungen (21, 22, 23) hergestellt wird,
wobei die Maschinenkommunikationsvorrichtung (21) und die weitere Maschinenkommunikationsvorrichtung (22, 23) beide
- neben der Funkschnittstelle zu dem Mobilkommunikationsnetz (100) - jeweils eine weitere Funkschnittstelle umfassen, wobei die weitere Funkschnittstelle der Maschinenkommunikationsvorrichtung (21) und die weitere Funkschnittstelle der weitere Maschinenkommunikationsvorrichtung (22, 23) einen Kommunikationslink zwischen der Maschinenkommunikationsvorrichtung (21) und der weiteren Maschinenkommunikationsvorrichtung (22, 23) bereitstellen, **dadurch gekennzeichnet, dass** die Maschinenkommunikationsvorrichtung (21) und die weitere Maschinenkommunikationsvorrichtung (22, 23) so ausgestaltet sind, dass für den Fall, dass die Funkverbindung zwischen der weiteren Maschinenkommunikationsvorrichtung (22, 23) und der Basisstationsentität (111) funktionstüchtig ist, während die Funkverbindung zwischen der Maschinenkommunikationsvorrichtung (21) und der Basisstationsentität (111) nicht funktionstüchtig ist:
- eine Notfallmodus-Nachricht von der Basisstationsentität (111) zu der weiteren Maschinenkommunikationsvorrichtung (22, 23) gesendet wird, wobei der Notfallmodus-Nachricht einen Sendebefehl umfasst, Maschinenkommunikationsdaten von der Maschinenkommunikationsvorrichtung (21) abzurufen,
- eine Notfallmodus-Anforderung von der weiteren Maschinenkommunikationsvorrichtung (22, 23) zu der Maschinenkommunikationsvorrichtung (21) gesendet wird, um Maschinenkommunikationsdaten zu der weiteren Maschinenkommunikationsvorrichtung (22, 23) zu senden,
- die Maschinenkommunikationsdaten von der Maschinenkommunikationsvorrichtung (21) zu der weiteren Maschinenkommunikationsvorrichtung (22, 23) gemäß der Notfallmodus-Anforderung gesendet werden,
- die Maschinenkommunikationsdaten, die von der Maschinenkommunikationsvorrichtung (21) über den Kommunikationslink zwischen der Maschinenkommunikationsvorrichtung (21) und der weiteren Maschinenkommunikationsvorrichtung (22, 23) erhalten wurden, von der weiteren Maschinenkommunikationsvorrichtung (22, 23) zu der Basisstationsentität (111) gesendet werden.

8. Maschinenkommunikationsvorrichtung (21) und weitere Maschinenkommunikationsvorrichtung (22, 23) nach Anspruch 7, wobei die weitere Funkschnittstelle eine Funkschnittstelle gemäß mindestens einem der folgenden Standards ist:
- der Bluetooth-Standard,
- der ZigBee-Standard,
- eine NFC (Near Field Communication)-Standard.

9. System zum Verbessern einer Maschinenkommunikation zwischen einem Mobilkommunikationsnetz (100) einerseits und mehreren Maschinenkommunikationsvorrichtungen (20) andererseits, wobei das System das Mobilkommunikationsnetz (100) und die mehreren Maschinenkommunikationsvorrichtungen (20) umfasst,
wobei das Mobilkommunikationsnetz (100) mindestens eine Basisstationsentität (111) umfasst, wobei - wenigstens vorübergehend - jeweils eine Funkverbindung zwischen jeder der Maschinenkommunikationsvorrichtungen (20) und der Basisstationsentität (111) über eine Funkschnittstelle der Maschinenkommunikationsvorrichtungen (20) mit dem Mobilkommunikationsnetz (100) hergestellt wird,
wobei die mehreren Maschinenkommunikationsvorrichtungen (20) mindestens eine erste Maschinenkommunikationsvorrichtung (21) und - neben der ersten Maschinenkommunikationsvorrichtung (21) - mindestens eine weitere Maschinenkommunikationsvorrichtung (22, 23) umfassen,
wobei die erste Maschinenkommunikationsvorrichtung (21) und die mindestens eine weitere Maschinenkommunikationsvorrichtung (22, 23) beide - neben der Funkschnittstelle zu dem Mobilkommunikationsnetz (100) - jeweils eine weitere Funkschnittstelle umfassen, wobei die weitere Funkschnittstelle der ersten Maschinenkommunikationsvorrichtung (21) und die weitere Funkschnittstelle der mindestens einen weiteren Maschinenkommunikationsvorrichtung (22, 23) einen Kommunikationslink zwischen der ersten Maschinenkommunikationsvorrichtung (21) und der mindestens einen weiteren Maschinenkommunikationsvorrichtung (22, 23) bereitstellen,
**dadurch gekennzeichnet, dass** das System so ausgestaltet ist, dass für den Fall, dass die Funkverbindung zwischen der mindestens einen weiteren Maschinenkommunikationsvorrichtung (22, 23) und der Basisstationsentität (111) funktionstüchtig ist, während die Funkverbindung zwischen der ersten Maschinenkommunikationsvorrichtung (21) und der Basisstationsentität (111) nicht funktionstüchtig ist:
- eine Notfallmodus-Nachricht von der Basisstationsentität (111) zu der mindestens einen weiteren Maschinenkommunikationsvorrichtung (22, 23) gesendet wird, wobei der Notfallmodus-Nachricht einen Sendebefehl umfasst, um Maschinenkommunikationsdaten von der ersten Maschinenkommunikationsvorrichtung (21) abzurufen,
- eine Notfallmodus-Anforderung von der mindestens einen weiteren Maschinenkommunikationsvorrichtung (22, 23) zu der ersten Maschinenkommunikationsvorrichtung (21) gesendet wird, um Maschinenkommunikationsdaten zu der mindestens einen weiteren Maschinenkommunikationsvorrichtung (22, 23) zu senden,
- die Maschinenkommunikationsdaten von der ersten Maschinenkommunikationsvorrichtung (21) zu der mindestens einen weiteren Maschinenkommunikationsvorrichtung (22, 23) gemäß der Notfallmodus-Anforderung gesendet werden,
- die Maschinenkommunikationsdaten, die von der ersten Maschinenkommunikationsvorrichtung (21) über den Kommunikationslink zwischen der ersten Maschinenkommunikationsvorrichtung (21) und der mindestens einen weiteren Maschinenkommunikationsvorrichtung (22, 23) erhalten wurden, von der mindestens einen weiteren Maschinenkommunikationsvorrichtung (22, 23) zu der Basisstationsentität (111) gesendet werden.

10. System nach Anspruch 9, wobei die weitere Funkschnittstelle eine Funkschnittstelle gemäß mindestens einem der folgenden Standards ist:
- der Bluetooth-Standard,
- der ZigBee-Standard,
- ein NFC (Near Field Communication)-Standard.

11. Programm, das einen computerlesbaren Programmcode umfasst, der, wenn er auf einem Computer oder in einer Maschinenkommunikationsvorrichtung (20) oder in einer Netzwerkkomponente eines Mobilkommunikationsnetzes (100) ausgeführt wird, den Computer oder die Maschinenkommunikationsvorrichtung (20) oder die Netzwerkkomponente des Mobilkommunikationsnetzes (100) veranlasst, ein Verfahren nach einem der Ansprüche 1 bis 6 auszuführen.

12. Computerprogrammprodukt zur Verwendung einer Maschinenkommunikationsvorrichtung (20) mit einem Mobilkommunikationsnetz (100), wobei das Computerprogrammprodukt ein Computerprogramm umfasst, das auf einem Speichermedium gespeichert ist, wobei das Computerprogramm Programmcode umfasst, der, wenn er auf einem Computer oder in einer Maschinenkommunikationsvorrichtung (20) oder in einer Netzwerkkomponente eines Mobilkommunikationsnetzes (100) ausgeführt wird, den Computer oder die Maschinenkommunikationsvorrichtung (20) oder die Netzwerkkomponente des Mobilkommunikationsnetzes (100) veranlasst, ein Verfahren nach einem der Ansprüche 1 bis 6 auszuführen.

## Revendications

1. Procédé d'amélioration d'une communication de type machine entre un réseau de communication mobile (100) d'une part, et une pluralité de dispositifs de communication de type machine (20) d'autre part,
dans lequel le réseau de communication mobile (100) comprend au moins une entité de station de base (111), dans lequel - au moins temporairement - une connexion radio entre chacun des dispositifs de communication de type machine (20) et l'entité de station de base (111) est établie via une interface radio des dispositifs de communication de type machine (20), respectivement, avec le réseau de communication mobile (100),
dans lequel la pluralité de dispositifs de communication de type machine (20) comprend au moins un premier dispositif de communication de type machine (21) et - outre le premier dispositif de communication de type machine (21) - au moins un autre dispositif de communication de type machine (22, 23),
dans lequel le premier dispositif de communication de type machine (21) et ledit au moins un autre dispositif de communication de type machine (22, 23) comprennent tous deux - outre l'interface radio avec le réseau de communication mobile (100) - une autre interface radio, respectivement, dans lequel l'autre interface radio du premier dispositif de communication de type machine (21) et l'autre interface radio dudit au moins un autre dispositif de communication de type machine (22, 23) fournissent une liaison de communication entre le premier dispositif de communication de type machine (21) et ledit au moins un autre dispositif de communication de type machine (22, 23),
**caractérisé en ce que** le procédé comprend les étapes suivantes dans le cas où la connexion radio entre ledit au moins un autre dispositif de communication de type machine (22, 23) et l'entité de station de base (111) est fonctionnelle, tandis que la connexion radio entre le premier dispositif de communication de type machine (21) et l'entité de station de base (111) est dysfonctionnelle :
- transmettre, dans une première étape, un message de mode urgence à partir de l'entité de station de base (111) audit au moins un autre dispositif de communication de type machine (22, 23), le message de mode urgence comprenant une commande de transmission pour récupérer des données de communication de type machine à partir du premier dispositif de communication de type machine (21),
- transmettre, dans une deuxième étape après la première étape, une demande de mode urgence à partir dudit au moins un autre dispositif de communication de type machine (22, 23) au premier dispositif de communication de type machine (21) afin de transmettre des données de communication de type machine audit au moins un autre dispositif de communication de type machine (22, 23),
- transmettre, dans une troisième étape après la deuxième étape, les données de communication de type machine à partir du premier dispositif de communication de type machine (21) audit au moins un autre dispositif de communication de type machine (22, 23) en fonction de la demande de mode urgence,
- transmettre, dans une quatrième étape après la troisième étape, les données de communication de type machine - obtenues à partir du premier dispositif de communication de type machine (21) via la liaison de communication entre le premier dispositif de communication de type machine (21) et ledit au moins autre dispositif de communication de type machine (22, 23) - à partir dudit au moins un autre dispositif de communication de type machine (22, 23) à l'entité de station de base (111).

2. Procédé selon la revendication 1, dans lequel les informations selon lesquelles la connexion radio entre le premier dispositif de communication de type machine (21) et l'entité de station de base (111) est dysfonctionnelle sont enregistrées dans un dispositif de mémoire.

3. Procédé selon l'une des revendications précédentes, dans lequel le message de mode urgence à partir de l'entité de station de base (111) audit au moins un autre dispositif de communication de type machine (22, 23) entraîne une reconfiguration dudit au moins un autre dispositif de communication de type machine (22, 23).

4. Procédé selon l'une des revendications précédentes, dans lequel la demande de mode urgence à partir dudit au moins un autre dispositif de communication de type machine (22, 23) au premier dispositif de communication de type machine (21) entraîne une reconfiguration du premier dispositif de communication de type machine (21).

5. Procédé selon l'une des revendications précédentes, dans lequel le procédé comprend les étapes supplémentaires, dans le cas où il est détecté que la connexion radio entre le premier dispositif de communication de type machine (21) et l'entité de station de base (111) est de nouveau fonctionnelle :
- transmettre, dans une cinquième étape après la quatrième étape, un message de mode normal à partir de l'entité de station de base (111) audit au moins un autre dispositif de communication de type machine (22, 23), le message de mode normal comprenant une commande pour arrêter pour récupérer des données de communication de type machine à partir du premier dispositif de communication de type machine (21),
- transmettre, dans une sixième étape après la cinquième étape, une demande de mode normal au premier dispositif de communication de type machine (21) pour transmettre de nouveau des données de communication de type machine à l'entité de station de base (111).

6. Procédé selon l'une des revendications précédentes, dans lequel la demande de mode normal est soit
- transmise par ledit au moins un autre dispositif de communication de type machine (22, 23) au premier dispositif de communication de type machine (21), soit
- transmise par l'entité de station de base (111) au premier dispositif de communication de type machine (21) .

7. Dispositif de communication de type machine (21) et autre dispositif de communication de type machine (22, 23) pour améliorer la communication de type machine entre une entité de station de base (111) d'un réseau de communication mobile (100) et le dispositif de communication de type machine (22, 23) et le dispositif de communication de type machine (21),
dans lequel - au moins temporairement - une connexion radio entre, d'une part, le dispositif de communication de type machine (21) et l'autre dispositif de communication de type machine (22, 23) et, d'autre part, l'entité de station de base (111), est établie via une interface radio des dispositifs de communication de type machine (21, 22, 23), respectivement,
dans lequel le dispositif de communication de type machine (21) et l'autre dispositif de communication de type machine (22, 23) comprennent tous deux - outre l'interface radio avec le réseau de communication mobile (100) - une autre interface radio, respectivement, dans lequel l'autre interface radio du dispositif de communication de type machine (21) et l'autre interface radio de l'autre dispositif de communication de type machine (22, 23) fournissent une liaison de communication entre le dispositif de communication de type machine (21) et l'autre dispositif de communication de type machine (22, 23),
**caractérisé en ce que** le dispositif de communication de type machine (21) et l'autre dispositif de communication de type machine (22, 23) sont configurés de sorte que dans le cas où la connexion radio entre l'autre dispositif de communication de type machine (22, 23) et l'entité de station de base (111) est fonctionnelle, tandis que la connexion radio entre le dispositif de communication de type machine (21) et l'entité de station de base (111) est dysfonctionnelle :
- un message de mode urgence est transmis à partir de l'entité de station de base (111) à l'autre dispositif de communication de type machine (22, 23), le message de mode urgence comprenant une commande de transmission pour récupérer les données de communication de type machine à partir du dispositif de communication de type machine (21),
- une demande de mode urgence est transmise à partir de l'autre dispositif de communication de type machine (22, 23) au dispositif de communication de type machine (21) afin de transmettre des données de communication de type machine à l'autre dispositif de communication de type machine (22, 23),
- les données de communication de type machine sont transmises à partir du dispositif de communication de type machine (21) à l'autre dispositif de communication de type machine (22, 23) en fonction de la demande de mode urgence,
- les données de communication de type machine - obtenues à partir du dispositif de communication de type machine (21) via la liaison de communication entre le dispositif de communication de type machine (21) et l'autre dispositif de communication de type machine (22, 23) - sont transmises à partir de l'autre dispositif de communication de type machine (22, 23) à l'entité de station de base (111).

8. Dispositif de communication de type machine (21) et autre dispositif de communication de type machine (22, 23) selon la revendication 7, dans lequel l'autre interface radio est une interface radio selon au moins l'une des normes suivantes :
- la norme Bluetooth,
- la norme ZigBee,
- une norme NFC (Communication en champ proche).

9. Système pour améliorer une communication de type machine entre un réseau de communication mobile (100) d'une part, et une pluralité de dispositifs de communication de type machine (20) d'autre part, dans lequel le système comprend le réseau de communication mobile (100) et la pluralité de dispositifs de communication de type machine (20),
dans lequel le réseau de communication mobile (100) comprend au moins une entité de station de base (111), dans lequel - au moins temporairement - une connexion radio entre chacun des dispositifs de communication de type machine (20) et l'entité de station de base (111) est établie via une interface radio des dispositifs de communication de type machine (20), respectivement, avec le réseau de communication mobile (100),
dans lequel la pluralité de dispositifs de communication de type machine (20) comprend au moins un premier dispositif de communication de type machine (21) et - outre le premier dispositif de communication de type machine (21) - au moins un autre dispositif de communication de type machine (22, 23),
dans lequel le premier dispositif de communication de type machine (21) et ledit au moins un autre dispositif de communication de type machine (22, 23) comprennent tous deux - outre l'interface radio avec le réseau de communication mobile (100) - une autre interface radio, respectivement, dans lequel l'autre interface radio du premier dispositif de communication de type machine (21) et l'autre interface radio dudit au moins un autre dispositif de communication de type machine (22, 23) fournissent une liaison de communication entre le premier dispositif de communication de type machine (21) et ledit au moins un autre dispositif de communication de type machine (22, 23),
**caractérisé en ce que** le système est configuré de sorte que, dans le cas où la connexion radio entre ledit au moins un autre dispositif de communication de type machine (22, 23) et l'entité de station de base (111) est fonctionnelle, tandis que la connexion radio entre le premier dispositif de communication de type machine (21) et l'entité de station de base (111) est dysfonctionnelle :
- un message de mode urgence est transmis à partir de l'entité de station de base (111) audit au moins un autre dispositif de communication de type machine (22, 23), le message de mode urgence comprenant une commande de transmission pour récupérer les données de communication de type machine à partir du premier dispositif de communication de type machine (21),
- une demande de mode urgence est transmise à partir dudit au moins un autre dispositif de communication de type machine (22, 23) au premier dispositif de communication de type machine (21) afin de transmettre des données de communication de type machine audit au moins un autre dispositif de communication de type machine (22, 23),
- les données de communication de type machine sont transmises à partir du premier dispositif de communication de type machine (21) audit au moins un autre dispositif de communication de type machine (22, 23) en fonction de la demande de mode urgence,
- les données de communication de type machine - obtenues à partir du premier dispositif de communication de type machine (21) via la liaison de communication entre le premier dispositif de communication de type machine (21) et ledit au moins un autre dispositif de communication de type machine (22, 23) - sont transmises à partir dudit au moins un autre dispositif de communication de type machine (22, 23) à l'entité de station de base (111).

10. Système selon la revendication 9, dans lequel l'autre interface radio est une interface radio selon au moins l'une des normes suivantes :
- la norme Bluetooth,
- la norme ZigBee,
- une norme NFC (Communication en champ proche).

11. Programme comprenant un code de programme lisible par ordinateur qui, lorsqu'il est exécuté sur un ordinateur ou sur un dispositif de communication de type machine (20) ou sur un composant de réseau d'un réseau de communication mobile (100), amène l'ordinateur ou le dispositif de communication de type machine ou le composant de réseau du réseau de communication mobile (100) à exécuter un procédé selon l'une des revendications 1 à 6.

12. Produit de programme d'ordinateur pour utiliser un dispositif de communication de type machine (20) avec un réseau de communication mobile (100), le produit de programme d'ordinateur comprenant un programme d'ordinateur enregistré sur un support de stockage, le programme d'ordinateur comprenant un code de programme qui, lorsqu'il est exécuté sur un ordinateur ou sur un dispositif de communication de type machine (20) ou sur un composant de réseau d'un réseau de communication mobile (100), amène l'ordinateur ou le dispositif de communication de type machine (20) ou le composant de réseau du réseau de communication mobile (100) à effectuer le procédé selon l'une des revendications 1 à 6.
